# EUROPEAN PATENT APPLICATION

(11) **EP 4 261 299 A1**
(43) Date of publication of application: **18.10.2023**
(21) Application number: 22167879.0
(22) Date of filing: 12.04.2022
(51) Int. Cl.: C22B 21/00, C01F 7/066, C01F 7/47

(54) **METHOD FOR PROCESSING BAUXITE RESIDUES FROM THE BAYER PROCESS, AND MINERAL PRODUCT OBTAINED BY SAID METHOD**

(71) Applicant: Dubai Aluminium PJSC, Dubai (AE)
(72) Inventor: GRAEFE, Markus, 3627 DUBAI (AE); ROSENBERG, STEVEN PHILIP, 3627 DUBAI (AE); HAYNES, Richard John, BRISBANE, 4115 (AU)
(74) Representative: Schmidt, Martin Peter

(57) **Abstract**

Method for producing a chemically and physically stable, neutral, non-saline inorganic product from bauxite residues, comprising the steps of:
(i) providing a washed and thickened bauxite residue,
(ii) in a so-called acidification step, reacting the washed and thickened bauxite residue with a sufficient quantity of a monoprotic Brønsted acid to achieve a final target pH between 5.5 and 8.5 at an addition rate such that the pH never drops below a value of 3.0,
(iii) in a so-called separation step, separating soluble reaction products from the remaining solids,
(iv) in a so-called post-acidification washing step, washing the remaining solids obtained in the separation step with a washing liquid.

Said product can be used as a growth medium or soil for growing plants, in pure form or in mixture with natural soil materials of geological or biological origin.

## Description

### Technical field of the invention

The invention relates to the general field of chemical processing of minerals, and to the more specific field of chemical processing of bauxite. More specifically, the invention relates to residues arising from the digestion of bauxite in the Bayer process. These bauxite residues, which may also be referred to as "red mud", are the terminal waste products of the Bayer process. The Bayer process has been the predominant industrial process for the extraction of aluminium from bauxite for over a century and is used in so-called alumina refineries all over the world.

The present invention is directed to a novel method for processing bauxite residues to produce a novel mineral product that is suitable as a substrate for agronomic use, and in particular as a soil or soil component for growing plants. This method can be used for converting bauxite residues directly following discharge from an alumina refinery, obviating the need to first store the residue in a purpose-built Bauxite Residue Storage Area (BRSA).

The invention also relates to a novel inorganic product obtainable by the method according to the invention, and its uses in agronomy.

### Prior art

Aluminium is the third most abundant chemical element in the earth's crust, after oxygen and silicon. Associated with oxygen, it is found in a very large number of rocks. The main industrial ore of aluminium is bauxite, discovered in 1821 in the village of Les Baux (France) by the geologist Pierre Berthier. Bauxite is a complex mixture of aluminium, iron and silicon oxides, which may include various impurities such as titanium, calcium, and magnesium. More precisely, bauxite is an ore comprising one or more of the three common aluminium minerals, namely gibbsite ((Al(OH)₃), boehmite (γ-AlOOH) and diaspore (a-AIOOH), mixed with varying smaller quantities of iron minerals, primarily goethite (a-FeOOH) and hematite (Fe₂O₃), which give bauxite its characteristic colour. Various siliceous minerals (including quartz and aluminosilicates such as kaolinite and illite) and titanium minerals (anatase and rutile (TiO₂) and ilmenite (FeTiO₃)) are also generally present, as well as an array of other impurities. The precise composition of bauxite depends on its mineralogical origins and geological history; this variation in composition relates both to the content of the main elements (Al, O, Si), the content of impurities, and its mineralogy.

The main industrial process used for extracting aluminium (in oxide form) from bauxite is the Bayer process, developed at the end of the 19^{th} century. It comprises essentially two steps: a first step of leaching the ore under pressure with a caustic soda solution (see patent DE 43 977 of 3 August 1888), and a second step of precipitating pure aluminium hydroxide (gibbsite, Al(OH)₃, also referred to as alumina trihydrate) from the sodium aluminate solution obtained in this way, by seeding with aluminium hydroxide crystals (see patent DE 65604 of 3 November 1892). The precipitated aluminium hydroxide can then be dehydroxylated by calcination to produce alumina (Al₂O₃) for use in the smelting of aluminium or to create specialty aluminas for catalysis or the ceramics industry.

More precisely, the Bayer process consists mainly of selective dissolution (so-called digestion) of the aluminous minerals in the bauxite by a hot solution (referred to as a liquor) of caustic soda. After digestion, the resultant slurry is cooled, and the clarified liquor is separated, usually by decantation, from the undigested solids. The solids are thickened and washed with water to recover entrained liquor, and the washings form part of the decanted clarified solution. The soda solution, supersaturated with sodium aluminate, is further cooled and then decomposed in the presence of seed crystals (crystallisation phase) to precipitate and extract gibbsite; the latter is then washed and calcined at a high temperature to produce smelter-grade alumina. The liquor, depleted of sodium aluminate after the crystallisation phase and diluted by the inlet of water, mainly from washing the solid residues, is evaporated and recycled to digestion for further processing.

The Bayer process is not completely selective for aluminium, and a number of other minerals can also be extracted into the caustic liquor prior to or during digestion. Most siliceous minerals in bauxite are readily soluble, and even quartz can dissolve under high temperature digestion conditions. When the concentration of this dissolved silica is sufficiently high, it undergoes reactions with the aluminate ion to form insoluble aluminosilicate compounds referred to collectively as Desilication Product (DSP). Most alumina refineries provide systems that allow this reaction to proceed to an acceptable steady state, both before and during digestion, and thus avoid silica contamination of the alumina product. These DSP minerals, typically variants of sodalite and cancrinite, consume sodium (and to some extent calcium) ions, and therefore consume caustic soda, which must be continually replenished. Moreover, these DSP minerals report to the residue, and are a significant source of alkalinity and sodium in Bauxite Residue (see bibliographic reference [1]; any bibliographic references to non-patent literature are used here as numerals in square brackets and listed below at the end of the Description section).

A number of other impurities can also enter the refinery's liquor stream, depending upon the bauxite, and most refineries have implemented processes to control them. These control measures are generally based upon the formation of insoluble products, often involving reactions with slaked lime (Ca(OH)₂), and these impurity removal products invariably become part of the bauxite residue. Other materials created and used in the process, such as tricalcium aluminate (TCA, Ca₃[Al(OH)₆]₂) used as a filtration aid in the clarification of liquor, are also directed to the residue once they are spent (see for example, WO 2002/011856). These materials may enter the process at various locations within the Bayer cycle, including during milling, prior to or during digestion, during clarification, or within the residue washing circuit.

Bauxite residue is thus the terminal waste product of the refinery, and consists of the undigested solids remaining after extraction of aluminous minerals, as well as the various reaction products and mineral wastes that arise in the operation of the refinery. Typically, bauxite residue is reddish in colour owing to the preponderance of iron minerals, and this has led to the other commonly used term, "red mud". In recent times, the term red mud has become less frequently used, as traditional disposal and storage methods involving the lagooning and "farming" of slurries with low solids content have given way to the more modern practice of pressure filtration of the residues and subsequent so-called dry storage of the damp cake.

While the composition of bauxite residues can vary from refinery to refinery, most share a number of common features. The main compounds in bauxite residue [2] are iron oxides and oxyhydroxides (such as hematite, goethite and magnetite), aluminium hydroxides and oxyhydroxides (such as gibbsite, diaspore and boehmite), siliceous compounds (such as quartz, illite, muscovite, sodalite and cancrinite), dawsonite (NaAl(OH)₂CO₃), titanium minerals (such as rutile, anatase, perovskite, ilmenite), and calcium compounds (such as portlandite, calcite, whewellite, tricalcium aluminate (TCA) and hydrocalumite). It also contains minor quantities of other metals, such as Li, Cr, Ga, Sc, Nb, V, Rb, Zr, As, in various chemical forms, mostly associated with oxygen. As prior art does not offer recycling options with sufficient capacity, bauxite residues typically end up in specific storage facilities (known as Bauxite Residue Storage Areas, BRSAs), or in landfill [3,4].

In this way, industrial facilities for the extraction and utilisation of bauxite generate a large amount of residues. The precise figures depend on the type of bauxite and the refinery's process parameters. For example, approximately 2.5 tonnes of good quality bauxite is required to produce one tonne of alumina via the Bayer process, creating approximately one tonne of bauxite residue. For some low grade bauxites, such as those found in Western Australia, the amount of bauxite residue can exceed 2 tonnes per tonne of alumina produced. BRSAs can occupy large areas; as an example, it has been reported [5] that the Rusal Aughinish Alumina (AAL) refinery in Limerick (Ireland) produces about 1.37 million tonnes of bauxite residues per year, which are stored in a BRSA that has expanded over time to occupy about 183 hectares. These BRSAs require regular maintenance and monitoring, and contribute to the on-going cost of operating an alumina refinery. In the case of an older refinery that practices slurry discharge and residue farming, such as described in reference [5], the process can be somewhat accelerated by regular turn-over and optionally squeezing of the thixotropic surface mud layer, thereby increasing the contact with the atmosphere; this contributes to the initial neutralization of the surface layer, and helps dry the deposited residue. Dedicated machines (so-called amphirols) are commercially available for this so-called residue farming; all this induces additional cost. Most BRSA designs allow for the residue to be stored to profile heights of tens of metres.

Prior art offers several ideas for how to use bauxite residues as a raw material in industrial processes [6][7]. However, this raw material possesses very little practical commercial value, if any, since dedicated raw materials of higher quality are often available at a lower cost. As a consequence, only a very small fraction of bauxite residues are actually used in industrial processes that are economically viable. Bauxite residue has found some limited application as a road construction material, in the production of cement, concrete and bricks, as a clay additive for the ceramic industry, and as a pigment; but this usage is of the order of a few percent of global production [8]. The vast majority will end up in a dedicated storage area (BRSA). Storage areas for industrial waste raise ecological issues (and hence require closure and monitoring plans which induce additional costs), and it would be desirable to decrease the quantity of such waste being stored in BRSAs.

The difficulty with finding practical applications for bauxite residues is largely related to both their high pH value and to their high content of sodium [9]. Both properties are incompatible with a direct use as landfill. Prior to any use, bauxite residues need to be neutralized, at least partially. Two types of approaches to neutralization can be distinguished in prior art : processes taking place *in situ* in the top layer of residues stored in a BRSA, and processes taking place in some kind of reactor vessel prior to the reaction products of such processes being discharged to a BRSA.

The central disadvantage of the prior art *in situ* process is that the material so produced cannot be freely deployed in the environment, and must therefore be stored indefinitely in a BRSA. Only the top layer of the stored residue is potentially rendered suitable for plant growth, and these systems therefore rely upon rehabilitation of the BRSA after its closure, with on-going maintenance and monitoring of leachates.

Concerning the treatment of bauxite residues in reactor vessels, prior art neutralization processes of bauxite residues have used concentrated carbon dioxide gas [10][11], carbon dioxide from flue gas [12][13] or sulfur-rich (SOₓ) stack gases in order to achieve a general reduction in pH, and thus render the material less hazardous. Sulphuric acid has also been used to achieve this initial neutralization. Subsequent thickening processes remove some of the entrained alkaline, saline-sodic solutions prior to discharge of a thickened slurry to a cell of a BRSA.

Rainfall over many seasons is relied upon to infiltrate the residue and progressively wash the remaining entrained salts to the base of the deposit, where they are collected via under-storage drainage systems. This creates depth profiles for pH and sodicity in the BRSA, in which the top layers (typically less than 0.3 m to 0.6 m) are near-neutral and have reduced sodicity, but the deeper layers have higher pH and higher sodicity. Some further neutralization occurs in the top layer of the BRSA due to the reaction with atmospheric CO₂. These weathering processes eventually lower the alkalinity in the surface layer to a point where it can be acceptable for some biological organisms. This process takes decades even under favourable rainfall conditions; however, the problems associated with sodicity persist. The fitness of such a surface layer for sustaining living organisms is therefore very limited, due to its residual sodicity.

Although initial pH reduction can be achieved rapidly with sulfuric acid or suitable pure gases, it is common for the neutralized products to rise in pH over time (so-called pH reversion) as dissolution of some of the alkaline minerals slowly replenishes the entrained solution with alkaline anions such as hydroxide (OH⁻) and carbonate/bicarbonate (CO₃²⁻/HCO₃⁻).

Seawater is known to neutralize bauxite residues [14][15]; this treatment can be carried out in reaction vessels. This process resides on the premise that excess soluble alkalinity in bauxite residues (which is mainly represented by the species CO₃²⁻, OH⁻ and Al(OH)₄⁻) reacts with sufficient magnesium and calcium ions (Mg²⁺, Ca²⁺) present in seawater to form layered double-hydroxides. As the concentration of these cations in seawater is low, an excess of seawater is therefore required to complete the desired reactions. A benefit of this approach is its ability to remove certain environmentally harmful ions (V, As, Cr) from the bauxite residue and sequester these ions within the layered double-hydroxide structures.

Seawater neutralized bauxite residue has an alkaline pH that ranges typically from about 8.2 to about 10.2, and that is tolerable for some plant species, but it is also excessively saline (electrical conductivity in excess of 20 mS/cm), and the unfavorable osmotic water potential will allow only highly specialized autotrophs to survive under these conditions. Consequently, alumina refineries that practice saltwater neutralization often have only limited success with rehabilitation, with the surfaces supporting sparse vegetation interspersed with salt plaques. This is particularly true where rainfall is inconsistent throughout the year, as this promotes the capillary rise of sodium salts, resulting in hypersalinity at the surface.

Prior art treatment in reactor vessels usually comprises three steps. In a first step, the deliquored bauxite residue from a Bayer process plant is acidified, thereby creating a partly neutralized, saline residue. As mentioned above, acidification can be done using sulphuric acid, SO₂, CO₂, seawater or rainwater. In a second step, this partly neutralized residue is thickened, and the thickener overflow, i.e. the saline overflow or filtrate, is discarded. In a third step, the partly neutralized, saline thickened slurry of bauxite residue is discharged to a BRSA where its surface layer will be exposed to weathering, including natural rainfall, and where its leachates will be monitored.

Neutralization of bauxite residues by strong acids has been studied in detail, and has turned out to be a scientifically challenging task due to the enormous complexity of the system characterized by multiple solid phases that interact with the liquid phase. Several buffer systems have been identified that are active at different pH values [9][16], and that lead to a set of complex chemical reactions as a function of pH. An authoritative review article from 2011 draws the conclusion that *"[i]t is impractical to remove the alkalinity from residue by washing with water or mineral acids"* [9], based on a thorough review of all relevant physico-chemical parameters. Another review article from 2011 simply dismisses in six lines the neutralization by mineral acids as impractical due to its high cost [4].

A significant failing of all of the above processes is that they do not adequately address the issues of salinity and sodicity that remain after neutralisation. Unless the residue is comprehensively washed, salinity will remain high with a significant sodium component, which renders the neutralized residue saline-sodic. In addition, some reaction products that remain after neutralisation can also contribute to elevated salinity due to their buffering behaviour; such is the case of an excess of gypsum when H₂SO₄ and/or seawater are used as a neutralizing agent. Furthermore, if the extent of neutralisation is inadequate, over time the residue will revert to an alkaline-sodic state. These characteristics hinder the use of ostensibly neutralised bauxite residue for many applications, but in particular present a substantial challenge to its use as a soil substrate, rendering it hospitable mainly to sodic and saline-tolerant fauna and flora.

The *in situ* surface layer BRSA neutralization process focuses on a deposited and deliquored layer of bauxite residue which has been allowed for some time (typically five years to a few decades) to react with naturally occuring rainfall. Residue farming, a method of continuous turn-over and (optionally) squeezing of the thixotropic surface mud layer, increases the contact with atmospheric CO₂ and contributes to an initial neutralization of the residue surface while drying the deposited residue. Years of rainfall, passive leaching, runoff and other means of deportment contribute further to pH reduction and removal of salinity, including sodium.

Upon salinity and some pH reduction (typically when the initial pH of 12 or above has dropped to about 10.5) in the upper 5 - 10 cm of the deposited materials, gypsum and compost are applied to initiate some micro-biological activity. Microbes use organic carbon as terminal electron acceptor sites producing CO₂ gas, which dissolves into the alkaline solution matrix as H₂CO₃, thereby generating two dissociable protons (H⁺ ions). The process is dependent on a continuous supply of metabolizable substrate for the microbes and an excess of rainwater being available to continuously remove the reaction products by passive leaching. Eventually, the upper centimetres of the deposited material become suitable for higher plants, usually grasses, associated with high sodium- and salinity tolerance. It should be noted that such favourable conditions of rainfall are not available everywhere in the world.

Even where these favourable conditions are met, however, without continuous maintenance and support of the remediated layer (akin to a self-forming cap) such remediated layers will revert to their original, alkaline-saline-sodic state because of diffusion and capillary processes transporting sodium and soluble alkalinity to the surface from the underlying caustic bauxite residue lens. This process is prone to occur any time net evaporation exceeds transpiration (rainfall, irrigation) and is potentially fatal to any generation of successor microbial colonies that are no longer adapted to high pH / high Na / high salinity environments. Such reversal of the previously remediated segment of a BRSA to its initial state is thought to have been observed at a refinery in the Northern Territory of Australia [17].

There is thus an obvious need to have other methods available for treating bauxite residues discharged from a Bayer process plant. In particular, the present invention aims at proposing an improved industrial process for the treatment of bauxite residue that obviates the need for storage in a purpose-built BRSA, leading to a solid product that can either be used directly for agronomic or other purposes or be stored as a non-hazardous material.

The present invention, to the best of our knowledge, is the first that proposes a complete, end-of-pipe industrial process to treat all of the residue generated by a Bayer Alumina Refinery. The environmentally benign material will no longer be in need of specialized storage in a purpose-built BRSA.

Such a method and product would be particularly desirable to the alumina industry in order to end the storage of caustic alkaline waste, which, despite best engineering practices, pose a long term risk to the environment and neighbouring residential areas.

Such a method and product would also be desirable for those alumina refineries that are located in areas where rainfall is inconsistent throughout the year, knowing that in BRSAs that are drying out, the residue will form dust, and sodium salts will rise to the surface where they may form salt plaques.

### Objects of the invention

According to the invention the problem is solved by a method which simultaneously leads to neutralisation, desalination and desodification of bauxite residues.

The first object of the invention is a method for producing a stable inorganic product from bauxite residues by neutralization, comprising the steps of:
(i) providing a washed and thickened bauxite residue;
(ii) in a so-called acidification step, reacting in a vessel with adequate agitation the washed and thickened bauxite residue with a sufficient quantity of a strong, monoprotic Bronsted acid to achieve a Target pH between 5.5 and 8.5 at an addition rate such that the pH never drops below a value of 3.0;
(iii) in a so-called separation step, separating the soluble reaction products from the remaining solids; and
(iv) in a so-called post-acidification washing step, washing the remaining solids obtained in the separation step with a washing liquid.

After addition of a quantity of acid in step (ii), the reaction mixture remains agitated for a certain period of time to allow the chemical reactions to proceed sufficiently. This period of time can be determined by monitoring the pH value and electrical conductivity of the reaction mixture during step (ii) until the desired conditions are achieved.

Acidification step (ii) can be repeated several times, preferably once or twice more. It is preferred that each time step (ii) is carried out, it is followed by step (iii).

In the so-called post-acidification washing step (iv), the solids remaining in the last separation step (iii) are washed with a washing liquid to reduce entrained sodium and sodium species adsorbed on the solid, as well as soluble reaction products. It is preferred that the post-acidification washing step is carried out only after the last separation step (iii); it is not particularly advantageous to carry out a post-acidification washing step (iv) each time separation step (iii) is carried out. The washing liquid used in post-acidification washing step (iv) can be water. Advantageously, the electrical conductivity of the entrained washing liquid in washing step (iv) is monitored, and preferably also the pH value.

Post-acidification washing (iv) is advantageously carried out until the conductivity of the entrained washing liquid no longer exceeds 10 mS/cm (preferably no longer exceeds 5 mS/cm), and/or until the conductivity of a sample of the washed and deliquored solid, prepared as a 1:5 mass/volume ratio in water according to standard soil science practice, is less than 5 mS/cm (preferably less than 2 mS/cm). This can be reached by repeating post-acidification washing step (iv) several times in a batch mode, or by carrying it out in several stages in a continuous mode with a sufficient efficiency. As an example, post-acidification washing step (iv) can be carried our in a sequence of at meast two iterations.

According to another advantageous variant of the method according to the invention, which can be combined with the previous one, the sodicity of the entrained solution after the last step (iii) is reduced by adding within step (iv) a suitable desalination liquid containing a desalination agent, such as a solution of a salt of magnesium or calcium with a counterion, that is preferably monovalent, and that is advantageously selected from the groups comprising chloride, nitrate, perchlorate and acetate. CaCl₂ can be used, for example. The conductivity of said desalination liquid should not exceed 10 mS/cm.

The objective of the calcium or magnesium ions is to displace any remaining displacable sodium from the residues (i.e., desodification), while homogenizing as far as practical the composition of (a) ions held on the minerals' surfaces and (b) in solution. This practice leads to consistent final EC values at the end of post-acidification washing step (iv) with the extent of neutralization (i.e., pH) determined by the amount of acid applied in step (ii) and all of its embodied preferences (including those of step (iii)). The concentrations of calcium or magnesium in the wash solutions are gradually lowered (either in step-batch or gradual-continuous) manner to achieve the EC (and salinity) objectives of step (iv) and all of its preferred embodiments.

According to an advantageous feature of the method, the reaction of acidification step (ii) is carried out until the target pH in the reaction mixture reaches a value between 5.5 and 8.5.

The temperature of the reaction mixture during acidification step (ii) can be within the range of 0 °C and 100 °C, and preferably between 15 °C and 80 °C, and more preferably between 20 °C and 60 °C.

Said acid must be a monoprotic Brønsted acid, that is to say an acid that freely dissociates to liberate protons (H⁺) in an aqueous liquid medium. An acid that produces soluble salts with alkaline earth metals is preferred.

According to other advantageous features of the invention related to acidification step (ii):
- the concentration of monoprotic acid is in the range of 2N to 6N;
- said monoprotic acid is selected from the group comprising nitric acid, hydrochloric acid, perchloric acid and acetic acid. Strong monoprotic acids are preferred and hydrochloric acid is the most preferred acid. The total amount of acid used for step (ii) is applied in a plurality of portions, and every n^{th} acidification step (ii) is followed by an n^{th} separation step (iii), preferably in two or three iterations.

According to an advantageous variant of the method according to the invention, an ion exchange reagent is added to the reaction mixture, preferably during at least one of the acidification steps (ii).

The acidification step (ii) can be carried out in one or more batch operations, in one or a plurality of serially-connected continuous reactors, or combinations of both. In the case of batch operation, the manner of acid addition may be through a number of alternative means, of which two examples are the rapid dosing of a known aliquot of acid (here-after referred to as Rebound Mode), or by the slower titration of acid into the vessel to reach a desired pH value (here-after referred to as Setpoint Mode).

### Batch Operation - Rebound Mode:

In the first embodiment of batch operation according to the invention (Rebound Mode), in each step (ii) the quantity of acid is admitted into the reaction vessel through rapid continuous dosing at a controlled rate. During this continuous admission of acid, the pH value and electrical conductivity are monitored and the dosing rate adjusted if necessary to avoid the transient pH of the mixture in the vessel falling below 3.0, preferably not below 4.0, and even more preferably not below 5.5. The addition of acid is terminated when certain criteria related to pH and/or electrical conductivity are met.

In this first embodiment of batch operation, according to advantageous features of the invention related to acidification step (ii):
- Step (ii) is carried out several times, each execution of step (ii) being immediately followed by a step (iii). In this way, the soluble reaction products are separated from the remaining solids before the addition of fresh acid. In particular steps (ii) and (iii) can be carried out twice, three times (which is a preferred variant), or more than three times. Depending upon the method used to effect solid/liquid separation in step (iii), the remaining solids collected at separating step (iii) may be reintroduced into an acidification step (ii) carried out in said stirred reaction vessel, or first reslurried with additional water prior to reintroduction.
- The quantity of acid added to the reaction vessel decreases with increasing number of acidification steps (ii). Preferably, the first acidification step uses an acid quantity that corresponds to between 40 % to 70 % of the total quantity of acid to be admitted during the method, and preferably to about 45 % to about 60 %.
- During the first execution of acidification step (ii), addition of acid is terminated when a certain criterion related to pH is met; preferably no criterion related to electrical conductivity is applied. Said criterion related to pH is the following: the first acidification step (ii) is terminated when the transient pH rises to and exceeds a value of 6.3 again, after having first fallen below this value for a period of time due to the rapid addition of acid in Rebound Mode.
- During each subsequent execution of acidification step (ii), addition of acid is terminated when the transient pH at first falls below and then rises until it exceeds a maximum value in the range of 5.5 to 7.0 and/or the transient electrical conductivity starts dropping after having reached its maximum value.

### Batch Operation - Setpoint Mode:

In a second embodiment of batch operation according to the invention (Setpoint Mode), in each step (ii) the quantity of acid is admitted into the reaction vessel in increments to approach and hold the pH at a predefined, so-called acidification setpoint value. Said acidification setpoint value is typically an intermediate value with respect to the initial pH value and the target pH value at the end of the last execution of separation step (iii).

Said setpoint value should ensure that the solid alkaline minerals present can dissolve in a reasonable period of time. For carbonate minerals such as calcite, dawsonite and other known carbonate buffers present in bauxite residue, this first setpoint pH is ideally 6.3 or less in order to promote the formation of H₂CO₃ and the evolution of CO₂ gas from the system and prevent carbonate's reprecipitation during step (iii).

During this admission of acid, the pH value and electrical conductivity are monitored, and addition of acid is discontinued when the setpoint is reached within a so-called setpoint range of ± 0.2 pH units and preferably within a setpoint range of ± 0.1 pH units. When this setpoint has been reached, if the pH value increases in the course of the neutralization reaction, admission of acid resumes in order to maintain the measured pH within the setpoint range.

The duration of acidification at each setpoint is defined based on criteria related to electrical conductivity of the suspension. During any one of the steps (ii), admission of acid is discontinued when the electrical conductivity reaches or exceeds a value of about 25 mS/cm; this value is somewhat dependent on the solid/liquid ratio, the nature of the buffers present in the residue, and works especially well for 30 % (w/w) solids suspensions.

As a rule, the EC rises proportionally to the amount of acid that is applied and the amount of acid that is applied is inversely proportional to the pH setpoint value. After a certain period of holding the reaction at a particular setpoint pH, it is no longer advantageous to continue, because the solid buffers that needed to be dissolved have dissolved, and the EC rises monotonically with acid addition. In practice, this can be observed by a flattening of the EC vs time curve or the derivative (delta EC/delta time) vs time. A threshold value for delta EC/delta time can thus be defined and should be less than 0.5 mS/cm per minute, preferably less than 0.25 mS/cm per minute and even more preferably less than 0.01 mS/cm per minute.

In this second embodiment of batch operation, according to advantageous features of the invention related to acidification step (ii):
- Step (ii) is carried out several times, such as to approach multiple, successively lower or equal pH setpoints in sequence. In particular step (ii) can be carried out twice, three times, or more than three times.
- Each execution of step (ii) is followed immediately by a step (iii). In this way, the soluble reaction products are separated from the remaining solids before approaching the subsequent pH setpoint.
- The quantity of acid added to the reaction vessel decreases with inceasing number of acidification steps (ii). Preferably, the first acidification step uses an acid quantity that corresponds to about 50 % to about 70 % of the total quantity of acid admitted during the method, and preferably to about 55 % to about 65 %.
- The acidification setpoints are a pH value beween 4.0 and 7.0.

The first acidification setpoint is a pH value between 4.0 and 7.0, and is preferably below 7.0 and even more preferably below 6.3. Any subsequent acidification setpoint is a pH value less than or equal to the previous pH setpoint. As an example, if the first acidification setpoint was above a pH value of 6.3, then the second acidification setpoint is a pH value not exceeding 6.3, and is preferably less than 6.3.

### Continuous/ Semi-continuous Operation:

In another embodiment of the method according to the invention, steps (i), (ii), (iii) and (iv) are carried out as continuous, or semi-continuous processes.

In the continuous mode of operation, a washed and thickened slurry of bauxite residue (i) is continuously fed into a suitable reactor vessel into which acid is dosed to effect step (ii), and from which the contents are continuously removed. A pH setpoint is established in the vessel which may be the desired final pH if a single tank is used. Preferably, a plurality of series-connected continuous reactor vessels are used, in which case the setpoint in each vessel may be an intermediate value between the initial pH of the incoming slurry and the desired final pH at the discharge of the final reactor in the series.

The pH setpoint in each tank is controlled by a suitable combination of the addition rate of bauxite residue slurry, rate of acid addition, rate of removal of the tank contents and the reaction rates of the residue components with the acid.

Slurry continuously removed from each tank is passed to a separation device to conduct step (iii); suitable devices for this purpose may include gravity thickeners, filters, continuous centrifuges or other such devices familiar to those skilled in the art. Where this separation occurs as the final step in the process, the separated solids are passed to a washing step (iv), which may consist of any suitable configuration of equipment, including a washing tank or similar device, or may occur as a batch operation in the separation (iii) device itself.

In a preferred embodiment of the continuous mode of operation, a plurality of continuous reactors and associated separation devices are connected in series using a counter-current flow configuration. The first of these vessels is fed with a washed and thickened slurry of bauxite residue (i) from the alumina refinery's mud washing circuit, for example, and with some or all of the clarified liquor from the second vessel's separation device. Acid is dosed into this first tank at a rate sufficient to achieve the desired pH setpoint. Thickened slurry or solids from this first tank's separation device are fed to the second vessel in series, and the clarified liquor from the first vessel's separation device is discarded. This second vessel is in turn fed by clarified liquor from the separation device of the next vessel in series and continuously dosed with acid to achieve a setpoint pH that is lower than that of the first tank. In a preferred embodiment, ion exchange reagent is dosed in the first, second and subsequent vessel in series.

This configuration may be repeated for as many steps as required to achieve the desired final pH and electrical conductivity targets. The final tank in the series is fed with thickened slurry from the penultimate tank, dosed with acid, and is fed with some or all of the spent washings from the washing step (iv). Discharge of the final tank is directed to a final separation step (iii), from where the thickened slurry is discharged to the washing step (iv). Following washing step (iv), a further separation stage takes place, from where thickened solids from the washing stage are recovered as product, and as indicated above, some or all of the spent washing liquid is sent to the final reactor vessel.

A second object of the invention is a product obtainable by the process according to the invention. Said product is a chemically and physically stable, neutral, non saline inorganic product. Neutral and non saline means here that a suspension of said product in water exhibits a low electrical conductivity; preferably, said product has surface properties such that when said product is suspended in water using a standard 1:5 mass to volume ratio, the resulting suspension has an electric conductivity not exceeding 2 mS/cm. Typically, the combined weight percentage of cancrinite and sodalite is less than 10 wt.-%, and preferably less than 7 wt.-% of the dry product.

A third object of the present invention is the use of the product obtainable by the process according to the invention as a growth medium or soil for growing plants, in pure form or in mixture with natural soil materials of geological or biological origin.

### Brief description of the figures

Figures 1 to 11 illustrate various aspects of the invention, but are not intended to limit the scope of the invention.
Figure 1 shows a basic flow diagram of the process according to the invention..
Figure 2 illustrates a basic flow diagram of a specific embodiment of the process according to the invention.
Figure 3 relates to Example 1 and shows the pH dependence on the electrical conductivity (EC) for three different solute compositions.
Figure 4 relates to Example 2 and shows the effect of intermittently removing dissolution products on neutralization kinetics.
Figure 5 relates to Example 3 and shows the effects of staging the acidification in decreasing concentration with intermittent removal of dissolution products on the EC (salinity) of the system.
Figure 6 relates to Example 4 and shows the effects of adding KCI into the process during acidification to promote the removal of sodium from bauxite residue.
Figure 7 relates to Example 5 and shows the uptake of K (expressed as K₂O) by bauxite residues as a function of the molar K/Na ratio at the outset of the acidification / exchange reaction.
Figure 8 relates to Example 6 and shows an X-ray diffraction (2θ) diagram in the 13° - 24° two theta (2θ) range for untreated bauxite residue (curve (a)) and bauxite residue treated according to the invention using three different KCI addition schemes (curves (b), (c) and (d)).
Figure 9 relates to Example 7 and shows the change in electrical conductivity (expressed in mS/cm per minute) over time during static neutralization of bauxite residue.
Figure 10 illustrates the various material flows of an embodiment of the process according to the invention carried out as a batch process.
Figure 11 illustrates the various material flows of an embodiment of the process according to the invention carried out as a continuous process.

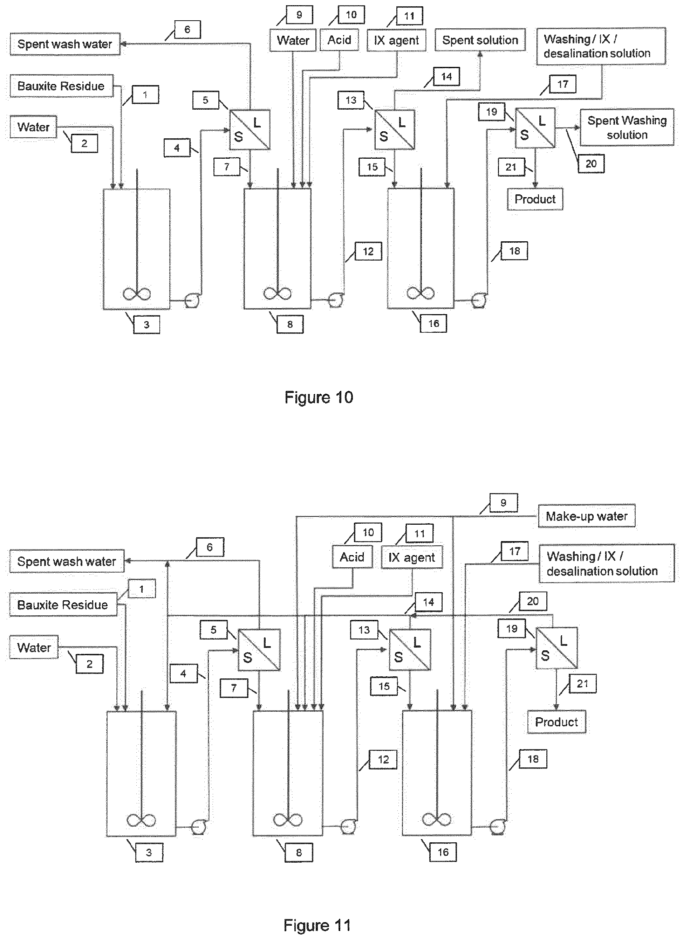

Reference numbers with one or two digits refer to components of machinery, to functions of components, or to material flows, and are used in figures 10 and11 and in the description.

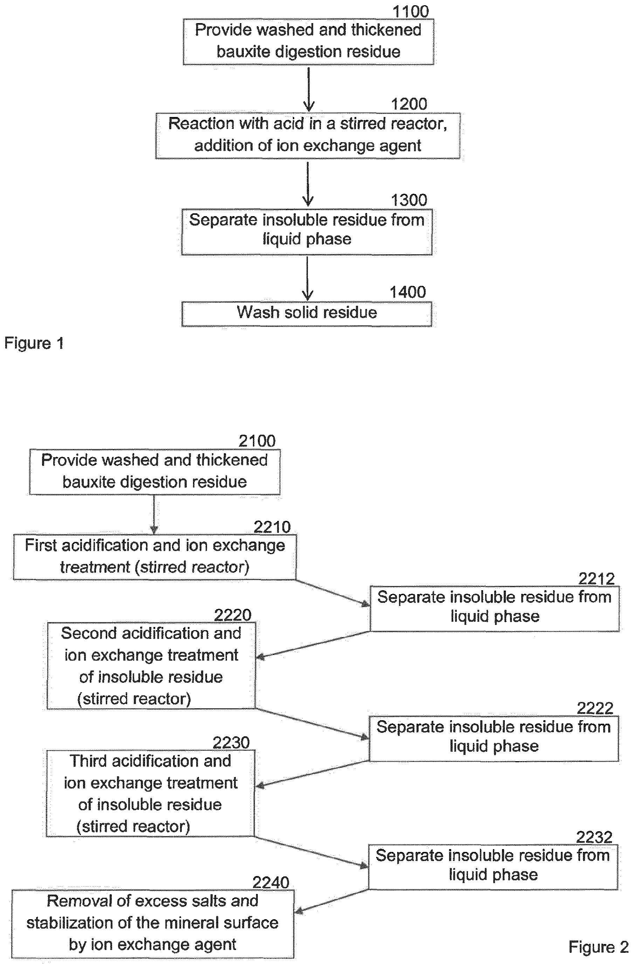

Reference numbers with four digits refer to process steps and are used in figures 1 to 2 and in the description.

### Detailed description of the invention

Figure 1 is a basic outline of the process according to the invention. It starts from a washed and thickened bauxite residue from Bayer processing of bauxite; providing such washed and thickened bauxite residue is therefore the first step **1100** of the process according to the invention.

Figure 10 is a basic representation of the material flows (and of certain components) of an embodiment of the process according to the invention carried out as a batch process. Any suitable means of effecting this washing and thickening step may be used but, advantageously, removal of the liquid phase is performed using appropriate filters. For example, removal of soluble alkalinity and sodium species may be achieved by washing using methods such as counter-current decantation followed by another stage of thickening, or can be achieved by on-filter washing until a low level of sodicity has been reached in the entrained liquid of the thickened bauxite residue. In figure 10, bauxite residue **1** is transported to a stirred tank reactor **3**, and resuspended with water **2** to effect the washing. Washed bauxite residue slurry **4** is transferred to a suitable solid/liquid separation device **5**, whereupon the slurry is deliquored. Spent washings separated from the slurry **6** are discarded, and washed and thickened bauxite residue **7** is transferred to the next stage of the process. Said washed and thickened bauxite residue preferably has a water content (w/w) of at least 20 weight %, preferably of at least 23 %, still more preferably of at least 26 % and even more preferably of at least 29 %, but not exceeding 32%.

It is not advantageous to utilize dried bauxite residues and may in fact be detrimental to the product properties even if all the steps of the invention are executed as intended including their preferred embodiments. In particular, the water content should be sufficient to prevent cementitious reactions from occurring in the thickened bauxite residue.

In a second step **1200** of the process according to the invention, the washed and thickened bauxite residue **7** is resuspended, optionally with additional water **9**, and reacted in a stirred reactor **8** with a suitable acid **10** such that the mixture achieves a final pH within a range between 5.5 and 8.5. During acid addition, the components of the bauxite residue react at different rates, and it is possible for the pH to fall temporarily to quite low values before the slowest reactions are complete. Care should be taken so as to ensure that the pH never falls below 3.0; it is preferred that the pH never falls below 4.0, and it is even more preferred that the pH does not fall below 5.5. This pH criterion is related to the tendency of certain mineral phases, typically cancrinite and sodalite, to start dissolving below a pH value of 5.5, depending on the presence of other buffers in this complex system, and this risk increases significantly as the pH drops below 5.5.

The method of carrying out the addition of said acid is subject to several embodiments of the invention, depending upon whether the process is carried out as a batch or continuous operation, and will be described below in relation to two particularly preferred embodiments, entitled here as the Rebound Mode and the Setpoint Mode, which will be explained below. During this second step **1200**, an ion exchange agent **11** (referred to as "IX agent" on figures 10 and 11) is also added to the reaction mixture, leading to cation exchange.

Said acid is preferably monoprotic, and is advantageously selected from the group formed by HNO₃, HCl, HClO₄, and CH₃COOH, or combinations thereof. HCI is preferred. The concentration of said monoprotic acid is preferably within the range of 2 N to 6 N. Stong mineral monoprotic acids are preferred. Sulphuric acid or phosphoric acid are not preferred because they will precipitate calcium as calcium sulphate and calcium phosphate, respectively. Similar considerations apply to other diprotic acids such as carbonic (H₂CO₃) and sulphurous acids.

In a third step **1300** of the process according to the invention, the soluble reaction products are separated from the remaining solid. Any known and appropriate technique can be used for this separation. In Figure 10, the soluble reaction products and remaining solid **12** are transported to a solid/liquid separation device **13**, whereupon the soluble reaction products **14** are discarded, and the reacted solids **15** are retained for further processing.

Acid addition may be carried out in a single step, or in multiple steps of two or more portions, with separation of the solid phase from the liquid between each step, typically by filtration. This means that the second step **1200** and the third step **1300** are performed at least once, and preferably more often than once, as a sequence. A portion of ion exchange agent is advantageously added after or with addition of each acid portion. While it is not strictly necessary to carry out the third step **1300** each time the second step **1200** has been carried out, this is preferred, and in any case, a separation step **1300** must follow the last acidification step **1200**. This will be explained below in more detail in relation with figure 11.

In a fourth step **1400** of the process according to the invention, the solids are washed with a suitable liquid to reduce both the entrained and adsorbed sodium species. Preferably, washing is carried out in such a way that the electrical conductivity of the entrained solution in the washed bauxite residue filter cake is reduced to a value of not more than 10 mS/cm. The salinity of a sample of the washed and deliquored solid, prepared as a 1:5 mass/volume ratio in water according to standard soil science practice, is such that its electrical conductivity is less than 5 mS/cm. Referring again to Figure 10, the reacted solids **15** are transferred to a stirred reactor **16** and resuspended and reacted with a suitable washing solution **17**. The washed and resuspended solid slurry **18** is transferred to a solid/liquid separation device **19**, where the spent washing solution **20** is separated and discarded, and the thickened and deliquored solids **21** are collected as product.

It is preferred that the temperature of the entire process of the process according to the invention be less than 100 °C.

We will now describe advantageous embodiments of the second step **1200**, that is to say the addition of acid. Advantageously, the absolute amount of strong, monoprotic Bronsted acid required for neutralization is applied over at least two steps, and more preferably over at least three steps. It is preferred in execution of this embodiment that at the end of each individual acidification, the soluble reaction products are separated from the remaining solids. This means that steps **1200** and **1300** are repeated at least once, possibly twice, and possibly still more often. This embodiment of the process illustrated on figure 1 will now be described in relation with Figure 2.

In the first step **2100** a washed and thickened bauxite digestion residue is provided. The second step **1200** of figure 1 is split up here in three steps **2210**,**2220**,**2230**. After the first acidification and ion exchange treatment **2210** of the slurry, a separation step **2212** is carried out in which the insoluble residue is separated from the liquid phase, typically by filtration. The remaining insoluble residue is slurried and undergoes a second acidification and ion exchange treatment **2220**, followed by a separation step **2222**. The remaining insoluble residue is then slurried again and undergoes a third acidification and ion exchange treatment **2230**, followed by a separation step **2232**. The remaining insoluble residue can then be treated for removal of excess salts 2240, and its mineral surface can be stabilized by an appropriate ion exchange agent (which is advantageously CaCl₂). In all embodiments, the addition of acid to the bauxite residue slurry is carried out either in a so-called "Rebound Mode", or in a so-called "Setpoint Mode".

We will describe now the Rebound Mode. In this mode, a fraction of the total acid requirement is applied rapidly to a reslurried bauxite residue suspension; the fraction of the total acid requirements applied in each step will decrease with increasing number of applications. In such a way, two or more fractions of acid can be applied, preferably three or more. The pH and electrical conductivity are monitored over time, and in particular the reversion of pH and electrical conductivity are detected and used as termination criteria for the acidification reaction.

More specifically, in the Rebound Mode embodiment of batch operation according to the invention, in each acidification step **1200**; **2210**, **2220**, **2230** the quantity of acid is admitted into the reaction vessel through rapid continuous dosing at a controlled rate. During this continuous admission of acid, the pH value and electrical conductivity are monitored to avoid the transient pH of the mixture in the vessel falling below 3.0, preferably not below 4.0. The addition of acid is terminated when certain criteria related to pH and/or electrical conductivity are met.

Any particular acidification should be terminated when the transient pH at first falls below and then exceeds a value chosen within the range 5.5 and 8.0, and/or when the electrical conductivity in the solution reaches its zenith and begins to fall. However, the termination criterion for the first acidification is independent of electrical conductivity and based only on the following pH criterion: acidification stops when the pH exceeds 8.0, preferably 7.0, and more preferably 6.3.

In this first embodiment of batch operation, according to advantageous features of the invention related to acidification step **1200**:
- Step **1200** is carried out several times, each execution of step **1200** being followed by a step **1300**. In this way, the soluble reaction products are separated from the remaining solids before the addition of fresh acid. In particular step **1200** can be carried out twice, three times (which is a preferred variant), or more than three times. Depending upon the method used to effect solid/liquid separation in step **1300**, the remaining solid collected at separating step **1300** may be reintroduced into an acidification step **1200** carried out in said stirred reaction vessel, or first reslurried with additional water prior to reintroduction. Such an embodiment is explained above in relation with figure 2.
- The quantity of acid added to the reaction vessel decreases with increasing number of acidification steps **1200**; **2210**, **2220**, **2230.** Preferably, the first acidification step uses an acid quantity that corresponds to between 40% to 70 % of the total quantity of acid admitted during the method, and preferably to about 45% to about 60 %.
- During the first execution of acidification step **1200**; **2210**, addition of acid is terminated when a certain criterion related to pH is met; preferably no criterion related to electrical conductivity is applied. Said criterion related to pH is the following: the first acidification step **1200**; **2210** is terminated when the pH rises to and exceeds a value of 6.3, after having first fallen below this value for a period of time.
- During each subsequent execution of acidification step **1200**; **2220**, **2230**, addition of acid is terminated when the pH at first falls below and then rises (ie. rebounds) until it exceeds a maximum value in the range of 6.0 to 7.0 and/or the electrical conductivity starts dropping after having reached its maximum value.

We will describe now the Setpoint Mode. In the Setpoint Mode embodiment of batch operation according to the invention, in each step **1200**; **2210**, **2220**, **2230** the quantity of acid is admitted into the reaction vessel in small increments to approach and hold the pH at a predefined, so-called acidification setpoint value. Said acidification setpoint value is typically an intermediate value with respect to the initial pH value and the target pH value at the end of the last execution of separation step **1300**; **2232**. Mutiple pH setpoints are maintained in sequence. The approach to the setpoint pH is rapid, and during this admission of acid, the pH value and electrical conductivity are monitored, and addition of acid is discontinued when the setpoint is reached within a so-called setpoint range of ± 0.2 pH units and preferably within a setpoint range of ± 0.1 pH units. When this setpoint has been reached, if the pH value increases in the course of the neutralization reaction, admission of acid may resume in order to maintain the measured pH within the setpoint range.

The soluble reaction products from any one pH setpoint acidification are separated from the remaining solids before approaching the subsequent pH setpoint. Multiple pH setpoint acidifications are executed in sequence with suitable solid-liquid separation and reslurrying of the thickened bauxite residue between each of two subsequent acidifiation steps. At least two acidification pH setpoints are defined and executed in sequence. In a preferable embodiment of this variant, the first acidification setpoint is between pH 5.5 and 7.0 , and preferably less than 6.3. The duration of acidification at each of these setpoints is advantageously defined on criteria of electrical conductivity. In particular, the electric conductivity during any one of the acidification sepoints does not exceed 25 mS/cm.

The duration of acidification at each setpoint is defined based on criteria related to electrical conductivity of the suspension. During any one of the steps **1200**; **2210**, **2220**, **2230**, admission of acid is discontinued when the electrical conductivity reaches or exceeds 25 mS/cm.

In this second embodiment of batch operation, according to advantageous features of the invention related to acidification step **1200**:
- Step **1200** is carried out several times, such as to approach multiple, successively lower or equal pH setpoints in sequence. In particular step **1200** can be carried out twice, three times, or more than three times.
- Each execution of step **1200** is followed by a step **1300**. In this way, the soluble reaction products are separated from the remaining solids before approaching the subsequent pH setpoint. As an example, in figure 2 each acidification step **2210**, **2220**, **2230** is followed by a separation step **2212**, **2222**, **2232**.
- The quantity of acid added to the reaction vessel decreases with inceasing number of acidification steps **1200**; **2210**, **2220**, **2230**. Preferably, the first acidification step **2210** uses an acid quantity that corresponds to about 50 % to about 70 % of the total quantity of acid admitted during the method, and preferably to about 55 % to about 65 %.
- The first acidification setpoint is a pH value beween 5.5 and 7.0.
- The second and subsequent acidification setpoints are a pH value between 5.5 and 6.3.

In both the Rebound Mode and the Setpoint Mode, preferably an ion exchange reagent is added to the reaction mixture, and more preferably during the acidification steps, and still more preferably during each of the acidification steps. The purpose of the ion exchange agent is to replace sodium sorption by another alkali or alkaline earth element such as potassium (K). This is advantageous because sodium (Na) has no known physiological function in higher plants, and its displacement from bauxite residues for the purpose of using the product in an agronomic setting is highly favourable. Not only the removal of Na is preferable, but the capture of the applied K is also preferable, as it is a major plant nutrient. The term "sorption" is the generic term applied in soil chemistry to denote the removal of an ion from solution and its transfer into or onto a solid state. Sorption can be specified as adsorption, uptake on a mineral surface by chemical or physical bonding, or via precipitation.

The ion exchange reagent is advantageously applied in approximately equal portions over the number of intended acidification steps, knowing that the quantity of acid introduced during the plurality of acidification steps is normally not equal but decreasing. A suitable ion exchange reagent that can be used is an alkali and/or alkaline earth metal salt (other than a sodium salt), or an ammonium salt, or a mixture of these salts.

A suitable alkali and/or alkaline earth metal or ammonium salt for the purpose of ion exchange preferably has a monovalent counterion (anion) selected from the group formed by chloride, nitrate, perchlorate, and acetate, or combinations thereof. KCI is a particularly advantageous ion exchange agent.

An ion exchange agent can be added at each acidification step, or only to some of them. In a variant of this embodiment, no ion exchange agent is added to the first acidification step but only to one or more of the subsequent acidification steps. It has been found that if the first addition of the ion exchange agent takes place in the second or third acidification step this enhances the uptake efficiency of the applied ion exchange agent. This is because the concentration of soluble sodium decreases with each subsequent acidification, and the sorption of potassium increases linearly with increasing K/Na ratio.

In another variant, the addition of an ion exchange agent is deferred until the post-acidification washing steps, where it can be used as a separate step or in conjunction with the addition of the desalination agent, which will be described below. However, this desodification practice must be balanced against the overall desire to desalinate the system as efficiently as possible.

In both the Rebound Mode and the Setpoint Mode, after the last acidification step **2230**, the salinity of the entrained solution is reduced using a suitable liquid, called here the "desalination liquid". A suitable desalination liquid for this purpose has an electric conductivity of 10 mS/cm or less. Such a suitable liquid contains a desalination agent which is a salt of an alkaline earth metal of appropriate concentration such that its electrical conductivity advantageously does not exceed 10 mS/cm. Magnesium and calcium are suitable alkaline earth metals that can be used here. In an advantageous embodiment, a monovalent counterion (anion) is used for these alkaline earth metals, which is preferably selected from the group formed by chloride, nitrate, perchlorate, and/or acetate. CaCl₂ is a particularly preferred desalination agent. The desalination step **2240** can be carried out in a stirred reactor vessel. It can be followed by a separation step (not shown on figure 2) in which the solid is recovered. Said desalination step can be repeated with the recovered solid. A total of two desalination steps is advantageous, but three is preferred; a fourth step can be useful.

Preferably, the electrical conductivity of the entrained solution at the end of the step of reducing the salinity does not exceed 5 mS/cm, and is preferably below this value; it preferably does not exceed 3 mS/cm and still more preferably does not exceed 2.5 mS/cm, and most preferably does not exceed 2.0 mS/cm, and/or the ratio of soluble calcium and magnesium ions relative to sodium is greater or equal to 1.0 in the entrained solution of the final product of the process according to the invention. The pH is advantageously below a value of 8.6, and more preferably a value below 8.0.

As an example, we will describe here a typical sequence for a method according to the invention.

The sequence comprises three successive combined acidification and separation steps A (referred to as A1, A2, A3, and four post-acidification washing steps PAW, referred to as PAW1, PAW2, PAW3, PAW4).

The sequence is designated as: A1 + A2 + A3 + PAW1 + PAW2 + PAW3 + PAW4. In this example, HCI has been used as the strong, monoprotic Bronsted acid, KCI has been used as the ion exchange agent, and CaCl₂ has been used as the desalination agent. The post-acidification washing steps have been carried out with a suspension comprising 30 % of residue by weight.

The following concentration of Ca ions was used for each of the four post-acidification washing steps:
PAW1: 0.07 mol/L; PAW2: 0.02 mol/L; PAW3: 0.01 mol/L; PAW4: 0 mol/L.

The following electrical conductivity values were measured after each of the four post-acidification washing steps:
PAW1: 8.8 mS/cm; PAW2: 4.4 mS/cm; PAW3: 2.2 mS/cm; PAW4: < 2 mS/cm.

We will now describe in relation to figure 11 how the method according to the invention can be carried out as a continuous process. In this embodiment of the method according to the invention, steps **1100**, **1200**, **1300**, and **1400** are carried out as continuous, or semi-continuous processes.

In the continuous mode of operation, a washed and thickened slurry of bauxite residue (i) is continuously fed into a suitable reactor vessel into which acid is dosed to effect step (ii), and from which the contents are continuously removed. By reference to Figure 11, a continuous stream of bauxite residue **1** is directed to a stirred reactor **3** together with water **2** and the resultant washed residue slurry **4** is transferred to a solid/liquid separation device **5** to produce the washed and thickened slurry of bauxite residue **7**. Spent liquid **6** from the solid/liquid separation device is discarded. The washed and thickened slurry **7** is directed to a stirred reactor **8**, where it is resuspended, with additional make-up water **9** if required, and reacted with acid **10** and ion exchange reagent **11**. A pH setpoint is established in the vessel which may be the desired final pH if a single tank is used. Preferably, a plurality of series-connected continuous reactor vessels are used, in which case the setpoint in each vessel may be an intermediate value between the initial pH of the incoming slurry and the desired final pH at the discharge of the final reactor in the series. The pH setpoint in each tank is controlled by a suitable combination of the addition rate of bauxite residue slurry, rate of acid addition, rate of removal of the tank contents and the reaction rate of the residue components with the acid.

Slurry **12** continuously removed from each tank **8** is passed to a separation device **13** to conduct step (iii); suitable devices for this purpose may include gravity thickeners, filters, continuous centrifuges or other such devices familiar to those skilled in the art. Where this separation occurs as the final step in the process, the separated solids **15** are passed to a washing step (iv), which may consist of any suitable configuration of equipment, including a washing tank or similar device, or may occur as a batch operation in the separation (iii) device itself. Spent liquid **14** from the solid/liquid separation device **13** is either discarded, or optionally a proportion may be returned to the bauxite residue washing tank **3** to supplement or partially replace wash water **2**.

The separated solids **15** are transferred to a stirred reactor **16**, where it is resuspended with make-up water **9** and reacted with a suitable washing solution **17**. Underflow slurry **18** from reactor **16** is deliquored in solid/liquid separation device **19**, and the thickened solids **21** are collected as product. The separated liquid **20** may be discarded, or optionally directed to reactor **8** to supplement or partially replace make-up water **9**, and/or optionally directed to reactor **3** to supplement or partially replace wash water **2**.

We will now describe a preferred embodiment of the continuous mode of operation. In this mode of operation, a plurality of continuous reactors and associated separation devices are connected in series using a counter-current flow configuration. The first of these vessels is fed with a washed and thickened slurry of bauxite residue from the refinery's mud washing circuit, for example, and with some or all of the clarified liquor from the second vessel's separation device. Acid is dosed into this first tank at a rate sufficient to achieve the desired pH setpoint.

Thickened slurry or solids from this first tank's separation device are fed to the second vessel in series, and the clarified liquor from the first vessel's separation device is discarded. This second vessel is in turn fed by clarified liquor from the separation device of the next vessel in series and continuously dosed with acid to achieve a setpoint pH that is lower than, or equal to, that of the first tank. In a preferred embodiment, ion exchange reagent is dosed in the first, second and subsequent vessel in series.

This configuration may be repeated for as many steps as required to achieve the desired final pH and electrical conductivity targets. The final tank in the series is fed with thickened slurry from the penultimate tank, dosed with acid, and is fed with some or all of the spent washings from the washing step (iv). Discharge of the final tank is directed to a final separation step, from where the thickened slurry is discharged to the washing stage. Following washing, a further separation stage takes place, from where thickened solids from the washing stage are recovered as product, and as indicated above, spent washing liquid is sent to the final reactor stage.

We will now describe the product resulting from the process according to the invention. It is a mineral product significantly different from the initial bauxite residue, no longer having the overriding caustic alkaline characteristics of its parent material. It should be noted that due to the significant variation of the chemical and mineralogical composition of geologically occurring Bauxite ores (see for instance [21]), it is hardly possible to give a meaningful, distinctive characterization of the product resulting from the process according to the present invention by its chemical or mineralogical composition (even if the product obtained by processing of Bauxite residues obtained from a specific Bauxite ore exhibits chemical and mineralogic properties that are significantly different from those of the initial Bauxite residue). Rather, the product obtainable from the process according to the present invention can be characterized by certain physico-chemical features.

In particular it has the following characteristic features:
- The product is chemically and physically stable and has a near neutral pH, which is typically in the range of 6.0 to 9.0, and preferably between 6.0 and 8.5, and even more preferably between 6.5 and 8.0; this range from 6.5 to 8.0 is the agronomically preferred range for a soil to sustain growth of most plants. As an example, the pH value of a solid-liquid mixture of 1:5 (mass to volume of the product in water) is typically between 7.0 and 8.0.
- The product has a low exchangeable sodium percentage (ESP), typically below 40 % of the effective cation exchange capacity, and preferably less than 20 %, and even more preferably less than 10 %, according to best agronomic practices. For this reason the product is called here "non sodic".
- The product has a low electrical conductivity, typically below 10 mS/cm. As an example, the electric conductivity of a solid-liquid mixture of 1 : 5 (mass to volume of the product in water) is typically less than 1 mS/cm. For this reason the product is called here "non saline".
- The product according to the invention has a reduced content of cancrinite and sodalite compared to the original bauxite residue. The combined percentage of cancrinite and sodalite in bauxite residues depends on the origin of the bauxite and typically comprises between 10 % and up to 30 % [9] of the bauxite residue by weight. In the product according to the invention, in order to achieve a pH of the suspended product of 8.0 or less, the combined quantity of the sodalite and cancrinite fractions are typically less than 10 % and preferably should not exceed 7 % of the mass of the bauxite residue by weight.
- The product has a fine particle size, typically possessing a P₉₀ below about 100 µm and P₅₀ below about 5 µm, depending on the initial particle size distribution of the bauxite residue produced by the alumina refinery.

A particularly preferred product contains calcium, potassium, magnesium and ammonium that together provide 60% or more of the effective cation exchange capacity.

As mentioned above, the product according to the invention is stable. A stable product here refers to the materials' degree of mineralogical and chemical inertness when suspended in an aqueous solution. Minerals of the product dissolve minimally into solution and surface bound ions (including protons, H⁺) quickly establish equilibrium with the embathing solution resulting in a low measurable electrical conductivity. The H⁺ ion concentration in the bulk solution (i.e., the pH) reflects the electric field established at the mineral-water interface with the embathing solution and its dissolved ion content. Both the pH and EC measured with conventional and appropriate sensors are therefore stable over time, do not revert to values of the original parent material (bauxite residue), and it may therefore be assumed that an equilibrium between minerals and solution has been established. Stable in this aspect, however, does not mean that the mineral-water system is buffered, i.e., can withstand changes in pH or EC when an acid, base or other salt is added to the mineral-water mixture that would offset said equilibrium.

These features are the result of the use of the method according to the invention which removes both the soluble and solid phase alkalinity that were present as various minerals including amorphous compounds. These include various mineral species of tri-calcium aluminate including katoite, calcium carbonates (calcite, vaterite, aragonite) and the feldspathoids, sodalite and cancrinite (as present), designated by a person skilled in the art as "desilication products" (DSP). Not all of the desilication products will have been dissolved in the process, which is a preferable outcome due to the ability to utilize these minerals for plant nutrient storage. Where K is applied to the process as an ion exchange agent, distinct peak shifts of sodalite's X-ray diffraction pattern can be observed in the X-ray diffractogram of the product in line with an expansion of the unit cell due to the greater ionic radius of K over Na (1.37 vs 1.00 Ångstrom; see reference [18]). No such peak shifts occur for cancrinite, but this does not signify that an exchange of K for Na in the cancrinite structure did not occur as a unit cell expansion is not required to accommodate the K⁺ ion.

When the product is suspended in water using a 1:5 mass to volume ratio, as per standard soil science practice, the suspension will typically have an electric conductivity of 2 mS/cm or less. The pH is a function of how much acid was applied; in a specific embodiment of the process according to the invention, which has been used for generating the Examples, the pH value is about 8, tending towards 7.5. The desired pH for the purpose of usage is tuned through the process.

Additional physicochemical properties may be specified in the context of agronomic use of the optimized bauxite residue. These would include the effective cation exchange capacity; exchangeable sodium percentage, and the sodium adsorption ratio as defined by Richards in 1954 [20].

The product according to the invention is reduced in cancrinite and sodalite content, but these are not completely removed. The presence of some of these minerals is beneficial, due to their high cation exchange capacity (> 900 cmol_{c}/kg), and the demonstrated exchangeability of Na by K.

The product according to the invention is not susceptible to the disadvantages of pH reversal and salinity reversal associated with prior art as noted above. It can be used as landfill, for construction purposes (such as embankments) and for agronomic applications, in particular as a soil for growing plants. The product according to the invention is especially valuable where silt-sized and clay-sized materials of geological origin do not occur naturally and consequently must be imported. Once put into the environment, monitoring and management of leachates can be simplified, may become obsolete after a relatively short period of time, or may be unnecessary from the beginning; this will also depend on climate, and whether any soil material (such as clay or humus) is added to the product, and what kind of soil is added. The necessity of a monitoring program can be assessed using leachate test programs known to a person skilled in the art. It may thereby obviate the need for a dedicated storage facility such as a BRSA.

The product can also be used for the closure of an existing BRSA to produce a covering cap suitable for site rehabilitation, reducing the need to import and use natural fertile soils for this purpose. It may also prove valuable as a basement material in the rehabilitation and landscaping of mined bauxite areas prior to adding the original native overburden, where the bauxite mine is in reasonable proximity to the alumina refinery.

### Examples

### Example 1

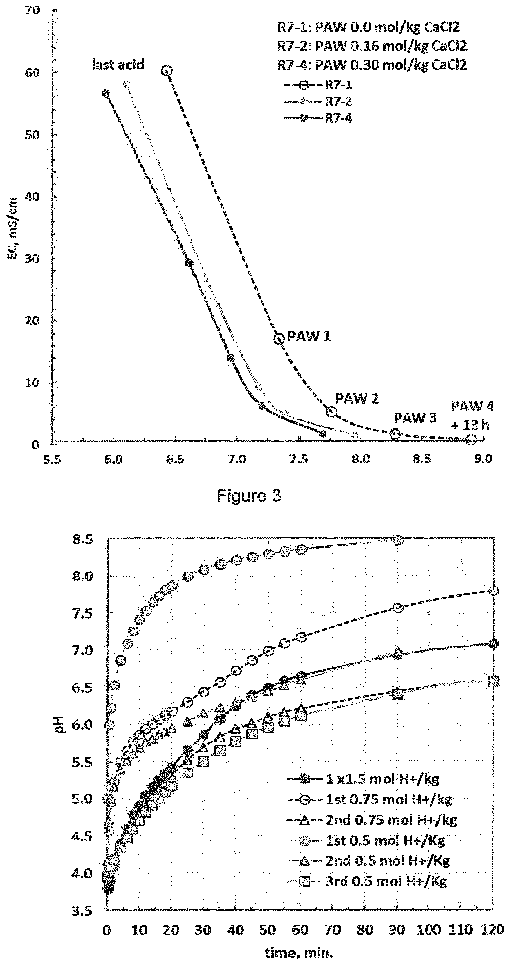

This example illustrates the pH dependence on electrical conductivity and the solution composition, in relation with Figure 3.

A bauxite residue slurry was washed free of excess soluble alkalinity in a 25 wt % suspension with reverse osmosis (RO) water, and the centrifuge cake was subsequently re-suspended to 30 wt% solids for two equally dosed, sequential acidifications (total acid dose rate = 1.0 mol H⁺/kg applied in each case as HCl). The dissolution product was removed by centrifugation and decantation of clear supernatant between reaction steps; the duration of each reaction (acidification, post-acidification washing) was 30 minutes. pH and EC were measured in the clear supernatant prior to decantation.Two concentrations of CaCl₂ during post-acidification washing (samples R7-2 and R7-3) were compared against a control without CaCl₂ (sample R7-1).

It can be seen from figure 3 that the pH increases continuously during desalination following acidification; this is a time-bound and dilution-affected process. Ca²⁺ shifts the stability of the final product to lower pH; this is a consequence of homogenizing the mineral surface and solution compositions with a divalent cation (instead of Na⁺ in sample R7-1).

### Example 2

This example illustrates the effect of intermittently removing dissolution products on kinetics and extent of neutralization, in relation with Figure 4.

A 30 wt % suspension of bauxite residue in reverse osmosis (RO) water was washed free of excess soluble alkalinity using a laboratory centrifuge. The subsequent centrifuge cake was re-slurried to 30 wt % using RO water and the required amount acid (2M HCI). The pH value and electrical conductivity (EC) were monitored and recorded over time. After a prescribed period of time, the reaction was terminated, and the mixture was centrifuged and, as necessary, resuspended to 30 wt% for a subsequent acidification.

Results are summarized in figure 4, and the following conclusions can be drawn:
For a nominal fixed total dose of acid (here 1.5 mol H⁺/ kg), the intermittent removal of acid dissolution products and exchange with "fresh" acid increases the rate and extent of neutralization.

The use of two neutralization steps, each at half dose (i.e. 0.75 mol H⁺/kg) lowers the pH by 0.5 unit relative to a single dose of 1.5 mol H⁺/kg. Two neutralization steps each at one third dose (i.e 0.5 mol H⁺/kg) results in the same pH as one acidification at 1.5 mol H⁺/kg, a reduction in acid consumption of 33% to achieve the same outcome..

Three neutralization steps at 33% of total dose rate are as effective as two neutralization steps at 50% of the total dose rate.

### Example 3

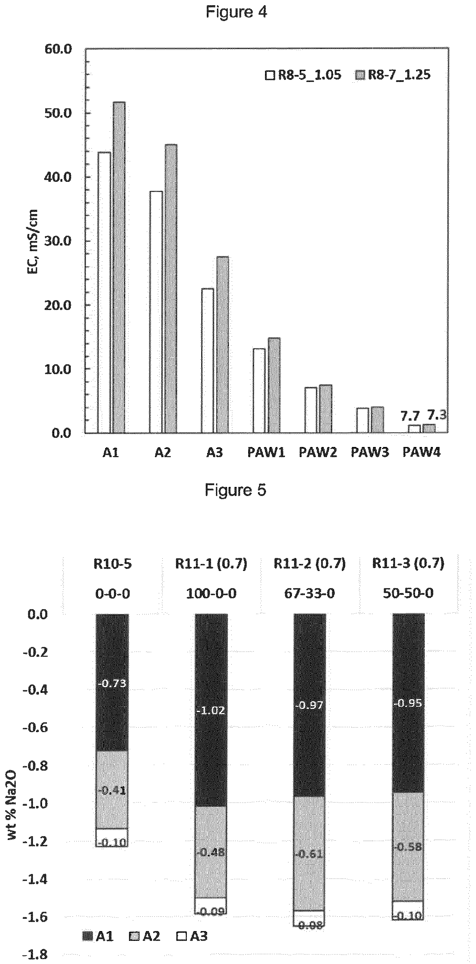

This example illustrates the effects of staging the acidification in decreasing concentration with intermittent removal of dissolution products, in relation with Figure 5. The objective of the process according to the invention is not only to neutralize, but also to render the final product non-saline.

A bauxite residue slurry was washed free of excess soluble alkalinity in a 30 wt % suspension with reverse osmosis (RO) water, and the centrifuge cake was subsequently re-suspended to 30 wt% solids for three sequential acidifications. Two total acid concentrations were applied and compared (1.05 vs 1.25 mol H⁺/kg, see respectively batches designated as "R8-5_1.05" and "R8-7_1.25") in sequence and distribution of 54 % (step A1), 33 % (step A2) and 13 % (step A3) of total acid. Post-acidification washing (PAW) occurred at 30 wt % with 0.07 mol Ca/L applied in three steps (step PAW1 = 0.04 mol/L CaCl₂, step PAW2 = 0.02 mol/L CaCl₂ and step PAW3 = 0.01 mol/L CaCl₂; the fourth washing step PAW4 was without CaCl₂). Dissolution products were removed by centrifugation and decantation of clear supernatant between each of the reaction steps; the duration of each reaction (acidification, post-acidification washing) was 30 minutes. pH and EC were measured in the clear supernatant after centrifugation and prior to decantation.

It can be concluded that staging of acidification neutralizes the bauxite residue while achieving the simultaneous benefit of washing it free of excess salts.The electrical conductivity (EC) of the liquid phase declines exponentially.

The effects of greater acid addition (1.25 vs 1.05 mol H⁺/kg) on final pH (7.3 vs 7.7) can be confidently assessed because the electrical conductivity EC (1.2 vs 1.1 mS/cm) and solution composition were homogenized with divalent Ca²⁺ ions (applied as CaCl₂).

### Example 4

This example illustrates the effects of adding KCl into the process during acidification to promote the removal of Na from bauxite residue, in relation with Figure 6.

A bauxite residue slurry of 37.5 wt% was washed twice in sequence with RO water to remove excess soluble alkalinity; centrifugation and decantation of the supernatant occurred. The centrifuge cake was resuspended to 30 wt% using RO water, acid and KCI solution. 1.05 mol H⁺/kg acid was applied at 54%, 33% and 13% of total dose rate in succession with intermittent removal of dissolution product by centrifugation and decantation of the supernatant. To the acid dose was added a solution of 2M KCI as a notional ion exchange (IX) reagent to provide a total dose of 0.7 mol K/kg. KCI was dosed in three distribution regimes over A1 to A3 as indicated in Fiugre 6: 100% during A1 (reference "R11-1"), 67% and 33 % over A1 and A2 (reference "R11-2"), and 50% and 50% over A1 and A2 (reference "R11-3"). A control experiment was run with pure water (reference "R10-5") instead of KCI solution.

The reduction in weight % of Na₂O for each of these treatment regimes can be seen in Figure 6, from which it can be concluded that the addition of KCI during the acidification overall enhances the acid-only removal Na from bauxite residue by about 33%.

### Example 5

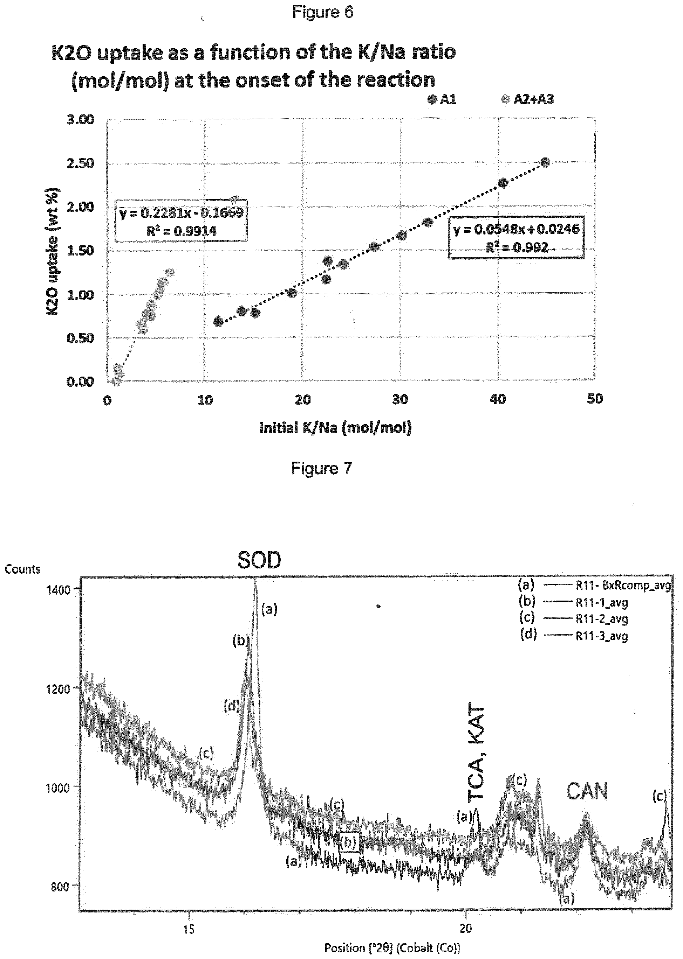

This example illustrates the uptake of K (expressed as K₂O) by bauxite residue as a function of the molar K/Na ratio in solution at the onset of the acidification/exchange reaction, in relation with Figure 7. The experimental details are the same as those described in relation with Example 4 (see figure 6).

The removal of adsorbed sodium (Na) as well as its replacement by potassium (K) are advantageous for the purpose of using the product in an agronomic setting, as sodium has no known physiological function in higher plants, whereas potassium is a major plant nutrient.

In order to assure and promote K sorption by bauxite residue during acidification, it may be calculated from solution analyses that the uptake of K by bauxite residue during acidification is dependent on the initial (molar) K/Na in solution. During acidification step A1, K sorption increases linearly with increasing K/Na ratio. During acidification steps A2 and A3, the increase in slope indicates a more efficient uptake of K largely driven by a decrease in residual soluble Na in the remaining entrained solution from the previous acidification / IX step; however, saturation effects from K-uptake during step A1 (and A2) are apparent, especially during step A3.

These observations sugest that staging K additions towards acidification steps A2 and A3 should increase the uptake efficiency of the applied K as soluble Na concentrations decrease with subsequent acidification.

### Example 6

This example shows the crystallographic analysis of a typical product according to the invention, in relation with figure 8.

Figure 8 shows an X-ray diffraction diagram of four samples taken after drying the solids separated after PAW4 in which the ion exchange agent (here potassium) was introduced during acidification according to example 4. Sample references R11-1, R11-2, and R11-3 refer to example 4.

A shift of the sodalite (SOD) peak to lower position is observed when K is added into the process (sample R11-1 (100-0-0), sample R11-2 (67-33-0), sample R11-3 (50-50-0)); the sequences of K addition are explained in example 4 (Figure 6). The extent of the shift reflects increasing K-for-Na substitution in the sodalite structure. The cancrinite peak (CAN) at 2θ = 22° remains unaffected.

As a result of the process, samples of the product obtained by the method according to the invention as shown (samples R11-1 (curve (b), R11-2 (curve (c), R11-3 (curve (d)) no longer show the presence of tricalcium aluminate (TCA) including katoite (KAT). Curve (a) relates to the untreated bauxite residue. (The nomenclature of "katoite" refers to reference [19]). The magnitude of the SOD and CAN peaks diminishes as a result of applying the process, but these minerals do not dissolve completely. Given their extraordinary cation exchange capacity (> 900 cmol/kg) and the demonstrated exchangeability of Na by K, these minerals are considered to be assets.

### Example 7

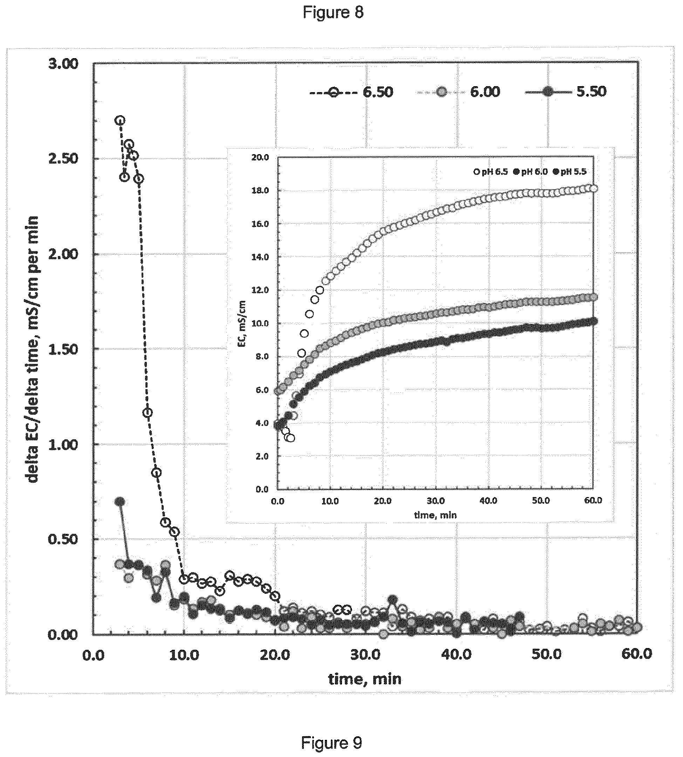

This example illustrates the change in electrical conductivity (EC) over time during setpoint neutralization of bauxite residue, in relation with figure 9.

In determining an advantageous endpoint for terminating acid addition during setpoint neutralization, the change in EC over change in time can be used to define a point in time when the EC no longer changes sufficiently as a result of setpoint acidification. At this point, the EC increases due to the addition of acid, but no longer due to a pronounced dissolution of buffering alkaline minerals, and the change in EC versus time becomes monotonic. At this point, acid dosing can be ceased, and in any case should be ceased when the EC reaches or exceeds 25 mS/cm.

A bauxite residue slurry was washed free of excess soluble alkalinity in a 30 wt % suspension with reverse osmosis (RO) water, and the centrifuge cake was subsequently re-suspended to 30 wt % solids for three sequential acidifications using a setpoint pH approach. Dissolution product was removed by centrifugation and decantation of clear supernatant between acidification steps; the duration of each reaction (acidification) was 60 minutes. The three acidification setpoint pH values were 6.5, 6.0 and 5.5 and were held at this pH +/- 0.1 units of pH. Setpoint pH was approached rapidly initially by addition of 2N HCI and then scaled back to approach setpoint pH without overshooting the setpoint pH by more than 0.1 units of pH.

### Bibliographic references

[1] Xiaofeng Zhu et a/.; "Basic Research on Calcification Transformation, Process of Low Grade Bauxite", Light Metals 2013, p. 239-244 (TMS).
[2] M. Gräfe, C. Klauber; "Bauxite residue issues: IV. Old obstacles and new pathways for in situ residue bioremediation"; Hydrometallurgy 108 (2011), p. 46-59
[3] G. Power, M. Gräfe, C. Klauber; "Bauxite residue issues: I. Current management, disposal and storage practices", Hydrometallurgy 108 (2011), p. 33-45
[4] Cooling, D.J; "Improving the sustainability of residue management practices - Alcoa World Alumina Australia", in Paste and Thickened Tailings: A Guide, R.J. Jewell and A.B. Fourie, Editors. 2007, Australian Centre for Geomechanics: Perth. p. 3-16.
[5] K. McMahon; "Bauxite Residue Disposal Area Rehabilitation", Travaux 46, Proceedings of 35th International ICSOBA Conference, Hamburg, Germany, 2-5 October 2017, p. 424-440.
[6] M. Saxena; "An Overview of Bauxite Residue Utilisation", 34th International Conference and Exhibition of ICSOBA: Bauxite, Alumina and Aluminium Industry in Canada and New Global Developments. 2016. Quebec, CA: Academie Croate des Sciences et des Arts, 1-12.
[7] C. Klauber, M. Gräfe, G. Power; "Bauxite residue issues: II. options for residue utilization", Hydrometallurgy 108 (2011), p. 11-32.
[8] S. Rosenberg, M. Gräfe; "EGA's unique Bauxite residue roadmap", 2nd conference of Bauxite Residue Valorisation and Best Practices, Athens, 7-10 May 2018.
[9] M.Gräfe, G. Power, C. Klauber; "Bauxite residue issues: III. Alkalinity and associated chemistry", Hydrometallurgy 108 (2011), p. 60-79.
[10] D.J. Cooling, P.S. Hay, L. Guilfoyle; "Carbonation of bauxite residue", Proc. 6th International Alumina Quality Workshop (2002), p. 185-190.
[11] X. Chao, T. Zhang, G. Lv, Y. Chen; "Effect of Concentrations and Pressures of CO2 on Calcification-Carbonation Treatment of Bauxite Residue", Light Metals 2020 (ed. A. Tomsett), p. 124-128.
[12] L. Guilfoyle, P. Hay, D. Cooling; "Use of flue gas for carbonation of bauxite residue", Proc. 7th International Alumina Quality Workshop (2005), p. 218-220.
[13] L.C.A. Venancio, J.A. Silva Souza, ELGL Macedo, F.A. Botelho, G. Costa Cesar; "Pilot test of bauxite residue carbonation wih flue gas", Light Metals 2013 (ed. B. Sadler), p. 113-118 (TMS).
[14] C. Hanahan, D. McConchie, J. Pohl, R. Creelman, M. Clark, C. Stocksiek; "Chemistry of Seawater Neutralization of Bauxite Refinery Residues (Red Mud)", Environmental Engineerign Science 21 (2004), p. 125-138.
[15] N.W. Menzes, I.M. Fulton, W.J. Morrell; "Seawater Neutralization of Alkaline Bauxite Residue and Implications for Revegetation", J. Environmental Quality 33 (2004), p. 1877-1884.
[16] J.W.C. Wong, G. Ho; "Neutralization and Cation Dissolution Characteristics of Bauxite Refining Residue", In: Varma, M.M. and Johnson Jr, J.H., (eds.) Hazardous and Industrial Waste: 20th Mid-Atlantic Industrial Waste and Hazardous Material Conference. Hazardous Materials Control Research Institute, Silver Spring, MD, USA (1988), pp. 247-264.
[17] This can be inferred from timeline imagery available on Google Earth at coordinates: 12°11'33.69"S and 136°42'57.68"E
[18] R.D. Shannon; "Revised effective ionic radii and systematic studies of interatomic distances in halides and chalcogenides", Acta Cryst. A, 1976 (32), p. 751-767.
[19] E. Passaglia, R. Rinaldi; "Katoite, a new member of the Ca3Al2(SiO4)3-Ca3Al2(OH)12 series and a new nomenclature for the hydrogrossular group of minerals". Bulletin de Minéralogie, 1984, 107(5), p. 605-618.
[20] L.A. Richards, ed.; "Diagnosis and Improvement of Saline and Sodic Soils". Agricultural Handbook No. 60. 1954, USDA: Washington, D. C. p.166.
[21] S. Rosenberg; "Impurity Removal in the Bayer Process". Travaux 46, Proc. 35th International ICSOBA Conference, Hamburg, 2-5 October 2017, p. 175-196.

## Claims

1. Method for producing a chemically and physically stable, neutral, non-saline inorganic product from bauxite residues, comprising the steps of:
(i) providing a washed and thickened bauxite residue,
(ii) in a so-called acidification step, reacting the washed and thickened bauxite residue with a sufficient quantity of a strong, monoprotic Bronsted acid to achieve a final target pH between 5.5 and 8.5 at an addition rate such that the pH never drops below a value of 3.0,
(iii) in a so-called separation step, separating soluble reaction products from the remaining solids,
(iv) in a so-called post-acidification washing step, washing the remaining solids obtained in the separation step with a washing liquid.

2. Method according to claim 1, wherein said acidification step (ii) and said separation step (iii) are carried out in a sequence of at least two iterations, and preferably three or more.

3. Method according to claim 1, wherein said post-acidification washing step (iv) is carried out in a sequence of at least two iterations.

4. Method according to claim 1, wherein said acidification step (ii) and/or said separation step (iii) are carried out as continuous processes.

5. Method according to claim 4, wherein said post-acidification washing step (iv) is carried out as a continuous process.

6. Method according to any of claims 1 to 5 wherein an ion exchange step is carried out by adding during said acidification step (ii) or during said post-acidification washing step (iv) an ion exchange reagent containing at least one ion exchange agent, said acidification step (ii) or said post-acification washing step (iv) being preferably the last acidification or the first post-acidification washing step, respectively.

7. Method according to claim 6, wherein said ion exchange agent is an alkali salt, other than a sodium salt, and/or an alkaline earth metal salt, and preferably such an alkali salt or alkaline earth salt having a monovalent anion, said monovalent anion being preferably selected from the group formed by chloride, nitrate, perchlorate, and/or acetate, and said ion exchange agent being most preferably potassium chloride (KCI).

8. Method according to any of claims 1 to 7, wherein said ion exchange reagent has an electric conductivity of 10 mS/cm or less, and wherein said ion exchange agent is a salt of an alkaline earth metal, preferably with a monovalent counterion that is still more preferably selected from the group formed by chloride, nitrate, perchlorate, and acetate, and said ion exchange agent being most preferably calcium dichloride (CaCl₂).

9. Method according to any of claims 1 to 8, wherein said Bronsted acid is a strong, monoprotic acid, preferably selected from the group formed by HNO₃, HCI, HClO₄, acetic acid, or a combination thereof, and still more preferably HCI, or a combination thereof.

10. Method according to any of claims 1 to 9, wherein the concentration of said Bronsted acid is within the range of 2N to 6N.

11. Method according to any of claims 1 to 10, wherein said acidification step is carried out in such a way that during the first acidification step, or during the continuous introduction of said Bronsted acid, the pH value as monitored by an appropriate measuring device never drops below 3.0, and preferably never drops below 4.0 , and still more preferably never drops below 5.5.

12. Method according to any of claims 1 to 11, wherein said washed and thickened bauxite residue has a water content of at least 20 weight %, preferably of at least 23 %, still more preferably of at least 26 % and even more preferably of at least 29 %, but not exceeding 32%.

13. Stable inorganic product obtainable by the method according to any of claims 1 to 12.

14. Stable inorganic product according to claim 13, **characterized in that** when said product is suspended in water using a standard 1:5 mass to volume ratio, the suspension has an electric conductivity not exceeding 2 mS/cm.

15. Stable inorganic product according to claims 13 or 14, **characterized in that** the combined weight percentage of cancrinite and sodalite is less than 10 wt.-%, and preferably less than 7 wt.-%.

16. Use of a product according to any of claims 13 to 15 as a growth medium or soil for growing plants, in pure form or in mixture with natural soil materials of geological or biological origin.
